# EUROPEAN PATENT APPLICATION

(11) **EP 2 183 998 A1**
(43) Date of publication of application: **12.05.2010**
(21) Application number: 08425715.3
(22) Date of filing: 07.11.2008
(51) Int. Cl.: A47J 27/18

(54) **Machine for the automatic, multiple and differentiated cooking of foodstuffs in general**

(71) Applicant: E.S.T. di Bosco Enrico, 10042 Nichelino (IT)
(72) Inventor: Bosco, Enrico, 10042 Nichelino (IT)
(74) Representative: Gervasi, Gemma

(57) **Abstract**

A machine for automatically cooking foodstuffs in general, comprising a boiler (2), a compensation chamber (22) and cooking means for multiple and differentiated doses of said foodstuffs, these means consisting of at least two cooking chambers (7-9), equipped with respective dosing units (12-14) for the same foodstuffs. Each dosing unit (12-14) is also provided with an upper conduit (17), adapted to selectively receive the food from a distributor hopper (18), arranged rotating above the same dosing units.

Compared to known machines in this field, the machine according to the invention offers the advantage of enabling to cook several doses of food, thereby overcoming the traditional need to have the same number of machines as there are doses to be cooked. Moreover, the machine according to the invention offers the important advantage of being able to cook, simultaneously, several doses of reciprocally different foodstuffs (e.g. spaghetti, macaroni and other types of pasta).

## Description

### Field of the invention

The present invention relates to a new machine, adapted to automatically cook multiple, differentiated doses of foodstuffs in general.

### Prior art

Current machines which carry out the automatic cooking of food essentially comprise a boiler for generating the steam needed to cook, a pressurised cooking chamber, and a chamber for compensating and draining the cooked food, for example a portion of spaghetti.

Known machines of the above-described type have the drawback of being single-dose type machines, with cooking times limited to the product to be cooked.

### Summary of the invention

The object of the present invention is to provide a new machine for automatically cook foods which, compared to known machines of the same type, allows to handle multiple doses of foodstuff.

A further object is to provide a machine of the above-mentioned type, which offers the possibility of cooking even different types of food at the same time.

Yet another object of the invention is to dispose of the steam produced by cooking the food, recovering the heat content thereof.

Lastly, a further object of the invention is to prepare the food, supplementing it at the same time with pre-determined doses of other ingredients, particularly food salt.

These and other objects are achieved by the machine according to claim 1. Preferred embodiments of the invention result from the remaining claims.

Compared to known machines in this field, the machine according to the invention offers the advantage of enabling to cook several doses of food, thereby overcoming the traditional need to have the same number of machines as there are doses to be cooked.

The machine according to the invention also offers the important advantage of being able to cook, simultaneously, several doses of different foodstuffs (e.g. spaghetti, macaroni and other types of pasta).

A further advantage of the machine according to the invention is the possibility of recovering the heat content of the steam discharged from the cooking chamber, so that it may be used for other services and at the same time eliminating the risks deriving from contact with annoying jets of steam.

Another advantage of the invention is obtaining from the cooking machine a product to which the other desired ingredients have already been added, such as, for example, salt for salting the cooked pasta.

### Brief description of the drawings

These and other objects, advantages and features will become more apparent from the following description of preferred embodiments of the machine according to the invention, illustrated by way of non-limitative example in the accompanying drawings, in which:
- figures 1 and 2 show a side view and a II-II cross-section view, respectively, of the main driving members of the machine according to the invention;
- figures 3 and 4 show a side view and a IV-IV cross-section view, respectively, of an alternative embodiment of the machine in the previous figures; and
- figure 5 shows a perspective view of the alternative embodiment of the machine in figures 3 and 4.

### Detailed description of the invention

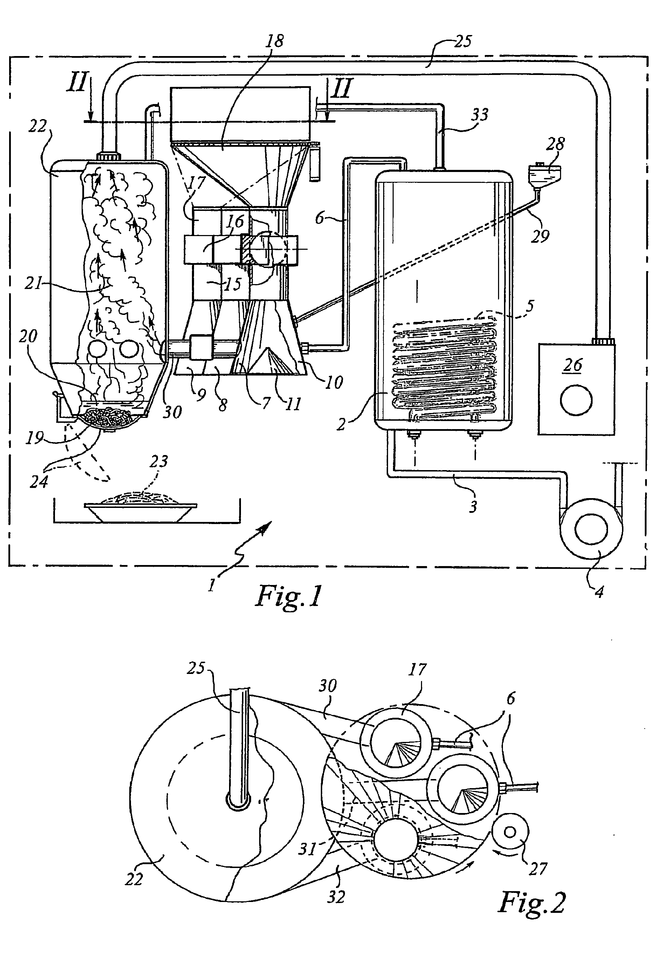

In Figure 1, number 1 indicates as a whole the machine according to the invention. It comprises a boiler 2, filled with water from a conduit 3, by means of a pump 4. As a heating means, the boiler 2 is provided with an electric heating coil 5. The steam generated inside the boiler 2 is sent by means of appropriate channels 6 to the food cooking devices.

In the example shown, these cooking devices consist of three cooking chambers, 7, 8 and 9 respectively, even if there could be fewer (at least two) or more (four or more) of these chambers. Each cooking chamber has a lower container 10, on the bottom of which a cone-shaped surface 11 is arranged, intended to avoid the agglomeration of the product to be cooked.

Above each cooking chamber 7 to 9, corresponding dosing units 12, 13 and 14 are arranged. Each dosing unit consists in turn of a lower conduit 15 for conveying the food into the corresponding cooking chamber 7-9, an intermediate valve 16 that opens and closes the food passage into the aforesaid chambers 7-9, and lastly an upper conduit 17 for conveying the food to said valve 16. A hopper 18 is further arranged rotating above the aforesaid upper conduits 17, to distribute the food individually into these conduits. As better illustrated in figure 2, where the hopper 18 has been removed for clarity, a motorised or manually activated rotating system 27 is provided for promoting the rotation of the distributor hopper 18.

The cooked food 19 is conveyed along with the cooking water 20 and steam 21 discharged from chambers 7 to 9, into a compensation chamber 22. In this chamber the steam 21 is separated from the drained food 23, the latter discharged by means of a tipping bottom 24 provided with a grid. The steam 21 is then conveyed, by means of a conduit 25, to a unit 26 for recovering the heat content of the steam (for example a device for humidifying towels, napkins and the like).

The machine 1 is further integrated with a salting device 28, adapted to dose the desired quantities of additional ingredients (e.g. food salt, seasoning, etc.) into the cooking chambers 7 to 9, through the respective conduits 29.

When operating the machine according to the invention, the foods to be cooked (e.g. different types of pasta) are loaded into the hopper 18 which, rotated by the device 27, transfers them into the respective conduits 17. From here, the food is transferred into the corresponding cooking chamber 7 to 9, passing first through the corresponding valve 16, and then along the underlying discharge conduit 15. The food is cooked inside these chambers, by contact with the steam coming from the respective channelling 6. The cooked food, condensation water and residual steam are then transferred into the compensation chamber 22, through respective transfer conduits 30, 31 and 32. Here, the food 19 is subjected to the final cooking phase, after which it is drained through the opening bottom 24 of the compensation chamber 22, provided with an appropriate grid (not shown). The steam, which leaves the chamber 22 through the respective channelling 25, is then re-used as a heating/humidifying means for various general applications (e.g. for the humidification of napkins). Lastly, a conduit 33 connects the boiler 2 to the compensation chamber 22, in order to transfer jets of steam into the latter to clean it.

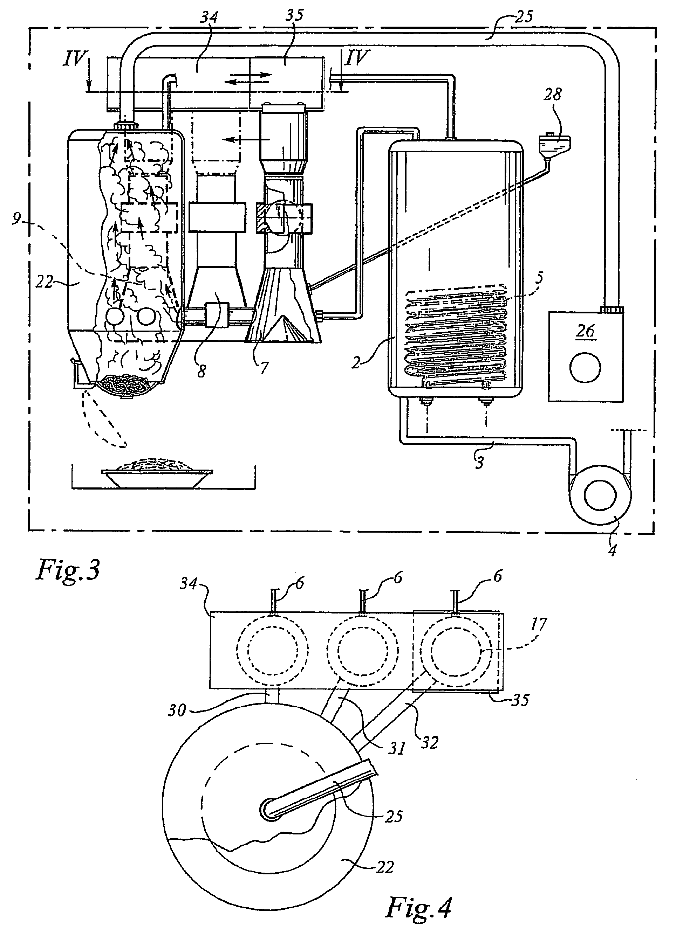

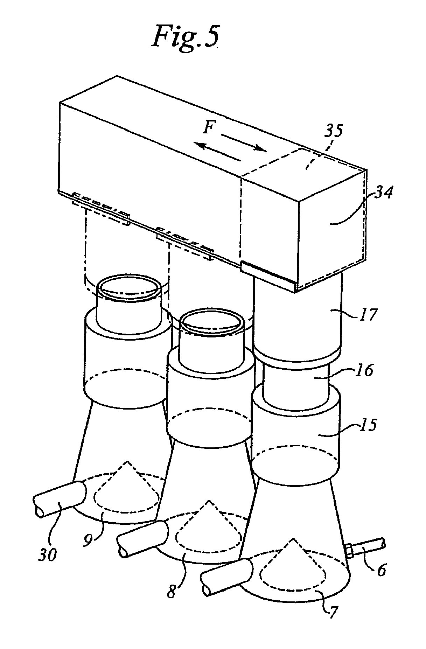

In the variant shown in figures 3 to 5, the rotating hopper 18 shown in the previous figures is replaced with a conveyor trolley 35, moving inside a chamber 34 arranged above the cooking chambers 6 to 9. In this embodiment, the movement of the distributor trolley 35 (arrows F in figure 5) is stopped at the cooking chamber into which the food needs to be loaded.

According to a variant (not shown), a microwave system is provided at the outlet from the tipping bottom 24, which microwave system is intended for preparing and cooking the pasta sauce, which occurs at the same time as the pasta is being cooked inside the chamber 22.

## Claims

1. A machine for automatically cooking foodstuffs in general, of the type comprising a boiler (2) and a compensation chamber (22), **characterized in that** it includes means of cooking multiple and differentiated doses of said foodstuffs.

2. A machine according to claim 1, **characterized in that** said cooking means consist of at least two cooking chambers (7-9), equipped with respective dosing units (12-14) for said foodstuffs.

3. A machine according to claim 2, **characterized in that** each dosing unit (12-14) is provided with an upper conduit (17), adapted to selectively receive the food from a distributor hopper (18), arranged rotating above said dosing units.

4. A machine according to claim 3, **characterized in that** said distributor hopper (18) is rotated by a corresponding motorised or manually activated device (27).

5. A machine according to claim 2, **characterized in that** each dosing unit (12-14) is provided with an upper conduit (17) that selectively receives the food from a distributor trolley (35) arranged sliding above said dosing units.

6. A machine according to claim 5, **characterized in that** said distributor trolley (35) is housed sliding inside a guide chamber (34).

7. A machine according to one or more of claims 1 to 6, **characterized in that** said boiler (2) is equipped with a conduit (3) for supplying water, in turn supplied by a pump (4), an electrical heating element (5) being provided to heat the water inside said boiler (2).

8. A machine according to claim 7, **characterized in that** it includes at least two cooking chambers (7-9), each comprising a dosing unit (12-14), a steam supplying channel (6) and a discharge conduit (30) for the cooked food (19).

9. A machine according to claim 8, **characterized in that** each dosing unit (12-14) comprises a conduit (15) for loading the raw food into the relative cooking chamber (7-9), as well as a corresponding valve (16) for opening and closing an upper conduit (17) for channelling said foodstuffs.

10. A machine according to claim 9, **characterized in that** each cooking chamber (7-9) consists of a container (10) provided with a bottom having a cone (11), adapted to avoid the agglomeration of the product to be cooked.

11. A machine according to claims 1 to 6, **characterized in that** it includes a conduit (25) for conveying the steam from said compensation chamber (22) to a heat recovery unit (26).

12. A machine according to claims 1 to 6, **characterized in that** it includes a device (28) for collecting the ingredients to be added to the food, said ingredients being conveyed by means of a connecting conduit (29) to the respective cooking chamber (7-9).

13. A machine according to one or more of the previous claims, **characterized in that** it includes a conduit (30-32) for transferring the cooked food from said cooking chambers (7-9) to said compensation chamber (22).

14. A machine according to claim 13, **characterized in that** it further includes a conduit (33) for the steam for cleaning said chamber (22), supplied by said boiler (2).

15. A machine according to one or more of the previous claims, **characterized in that** it includes a microwave system for cooking the pasta sauce, placed below a tipping grid bottom (24) for discharging the cooked food from said chamber (22).
